Europäisches Patentamt

European Patent Office

Office européen des brevets

(19)

(11) Numéro de publication : **0 467 752 A1**

# (12) DEMANDE DE BREVET EUROPEEN

(21) Numéro de dépôt : **91401899.9**

(22) Date de dépôt : **09.07.91**

(51) Int. Cl.⁵ : **F16H 63/48, F16H 57/08**

(30) Priorité : **17.07.90 FR 9009104**

(43) Date de publication de la demande :
**22.01.92 Bulletin 92/04**

(84) Etats contractants désignés :
**DE GB**

(71) Demandeur : **REGIE NATIONALE DES USINES RENAULT S.A.**
**34, Quai du Point du Jour**
**F-92109 Boulogne Billancourt (FR)**

(72) Inventeur : **Le Trouher, Guy**
**18, rue Danièle Casanova**
**F-94170 Le Perreux s/Marne (FR)**
Inventeur : **Buannec, Michel**
**65, rue du Tir**
**F-92000 Nanterre (FR)**

(54) **Ensemble de sortie de mouvement d'un train épicycloidal d'une boîte de vitesses automatique.**

(57) Ensemble de sortie de mouvement d'un train épicycloïdal (1) d'une boîte de vitesses automatique, caractérisé en ce qu'il comporte :
— une couronne flottante (2) de sortie de mouvement du train épicycloïdal (1),
— un pignon menant de descente (3),
— une roue de parcage (4),
qui sont intégrés par des moyens de liaison de manière à constituer un seul ensemble monobloc.

EP 0 467 752 A1

FIG.2

La présente invention se rapporte à un ensemble de sortie de mouvement d'un train épicycloïdal d'une boîte de vitesses automatique montée sur un véhicule automobile de tourisme.

Les boîtes de vitesses automatiques modernes doivent être disposées dans des véhicules automobiles qui laissent un compartiment moteur de plus en plus réduit. De ce fait, ces nouvelles boîtes de vitesses doivent avoir un encombrement aussi faible que possible.

On sait notamment que l'encombrement axial doit laisser la place à la fonction de la roue de parcage ainsi qu'à la fonction de sortie de mouvement et de l'engrenage de descente. Ces différents systèmes côte à côte nécessitent un encombrement relativement important, qui va à l'encontre des structures modernes des véhicules automobiles, notamment pour les groupes motopropulseurs qui sont montés transversalement dans les véhicules.

Le but de la présente invention est de proposer un ensemble de sortie de mouvement d'un train épicycloïdal d'une boîte de vitesses automatique qui intègre la fonction de la roue de parcage et le pignon de mouvement de descente.

Selon un mode de réalisation de l'invention, l'ensemble de sortie de mouvement d'un train épicycloïdal d'une boîte de vitesses automatique comporte :

– une couronne flottante de sortie de mouvement du train épicycloïdal,
– un pignon menant de descente,
– une roue de parcage.

Ces différents éléments sont intégrés dans des moyens de liaison de façon à constituer un seul ensemble monobloc.

Ces moyens de liaison consistent à intégrer, d'une part la roue de parcage à l'extrémité du pignon de descente, et d'autre part à solidariser la couronne flottante avec la roue de parcage par des crabots qui prolongent cette couronne flottante, pour pénétrer dans la partie inférieure des creux de dents de parcage, ceci afin d'assurer la liaison en rotation, tandis que la liaison en translation est donnée par un circlips qui est monté à la fois dans les dents de parcage et dans les crabots. La partie supérieure des creux de dents de parcage est réservée à la fonction de parcage.

Selon l'invention, le pignon de descente comporte un coeur sur lequel est monté l'élément denté avec lequel il est solidarisé. Ce coeur comporte un moyeu avec une jante, qui se prolonge par un élément conique avec l'extrémité munie des dents de parcage. La couronne flottante est constituée par un corps qui porte les dents d'engrenage; et le corps se prolonge par les crabots, qui pénètrent dans la partie inférieure des creux de dents de parcage.

L'ensemble de sortie de mouvement d'un train épicycloïdal d'une boîte de vitesses automatique, selon l'invention, présente ainsi l'avantage d'offrir un ensemble monobloc, qui intègre la couronne flottante de sortie de mouvement avec la roue de parcage et le pignon menant de descente. Ceci permet d'avoir un encombrement axial minimal, ce qui est particulièrement avantageux dans les groupes motopropulseurs transversaux, qui se montent dans les véhicules automobiles modernes.

D'autres caractéristiques et avantages de la présente invention ressortiront de la description qui suit le mode de réalisation donné à titre d'exemple, en référence aux dessins annexés, sur lesquels :

– la figure 1 est une vue partielle en bout de l'ensemble selon l'invention;

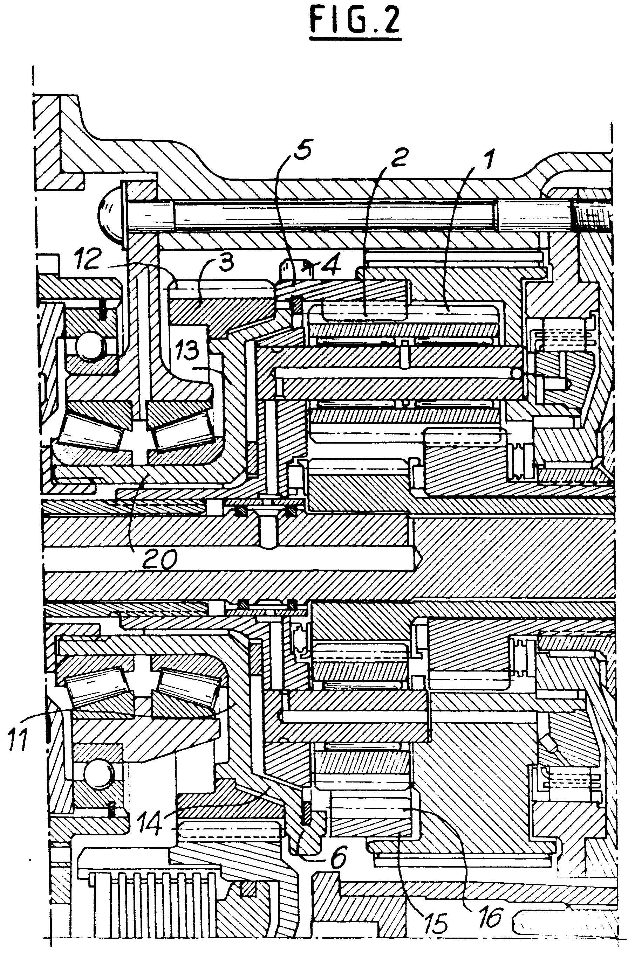

– la figure 2 est une coupe partielle suivant II de la figure 1;
– la figure 3 est une vue en perspective partielle du détail montrant la liaison de la roue de parcage avec la couronne du train épicycloïdal de la figure 2.

L'ensemble de sortie de mouvement d'un train épicycloïdal 1 d'une boîte de vitesses automatique selon l'invention, comporte :

– une couronne flottante 2 de sortie de mouvement du train épicycloïdal 1;
– un pignon menant de descente 3;
– une roue de parcage 4.

Ces différents éléments sont intégrés par des moyens de liaison de façon à constituer un seul ensemble monobloc; et ils consistent, d'une part, à intégrer la roue de parcage 4 à l'extrémité 5 du pignon de descente 3, et d'autre part, à solidariser la couronne flottante 2 avec la roue de parcage 4.

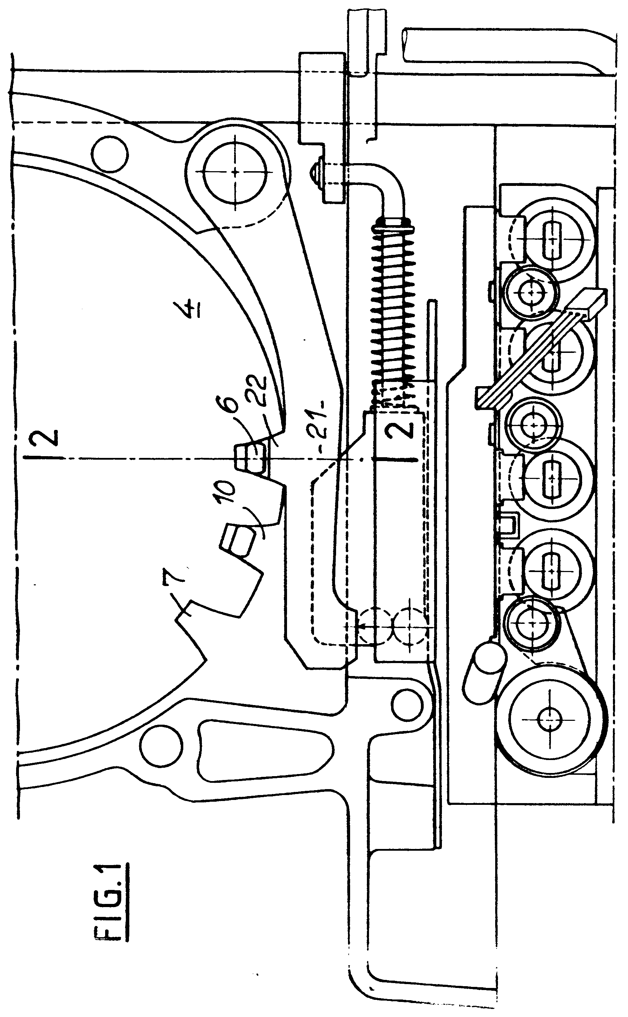

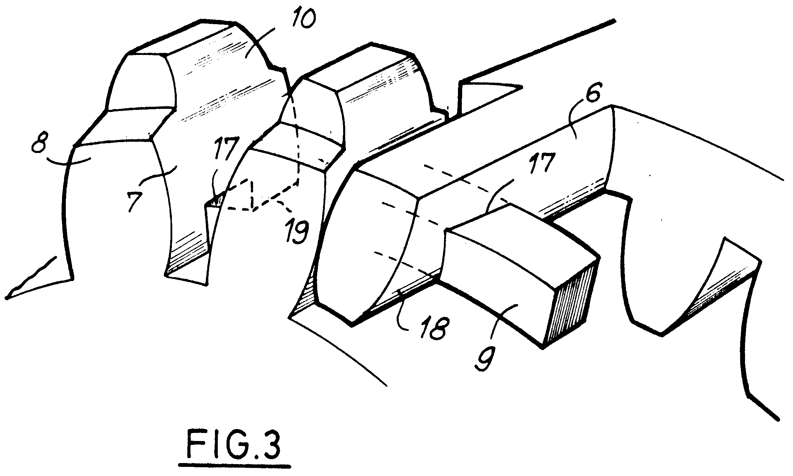

La couronne flottante 2 se prolonge par des crabots qui pénètrent dans la partie inférieure 7 des creux de dents de parcage 8, afin d'assurer la liaison en rotation de la couronne flottante 2 avec la roue de parcage 4, comme on peut le voir sur la figure 3. La liaison en translation entre ces deux éléments est donnée par un circlips 9, qui est monté à la fois dans les dents de parcage 8, et dans les crabots 6. La partie supérieure 10 des creux de dents de parcage 8 est réservée à la fonction parcage, comme on peut le voir sur la figure 1.

Le pignon de descente 3 comporte un corps 11 sur lequel est monté l'élément denté 12 avec lequel il est solidaire. Le corps 11 comporte un moyeu 20 avec une jante 13, qui se prolonge par un élément conique 14. L'extrémité 5 de cet élément conique 14 est munie des dents de parcage 8.

La couronne flottante 2 est constituée par un corps 15, qui porte les dents d'engrenage 16. Ce corps 15 se prolonge par les crabots 6, qui pénètrent dans la partie inférieure 7 des creux de dents de parcage 8.

Le circlips 9 se monte dans une encoche 17 qui est aménagée à la partie interne 18 de chacun des crabots 6, et à l'extrémité interne de chacune des dents de parcage 8.

L'élément denté 12 est solidarisé avec le corps 11 par une soudure par bombardement électronique.

**Revendications**

1. Ensemble de sortie de mouvement d'un train épicycloïdal (1) d'une boîte de vitesses automatique, caractérisé en ce qu'il comporte :
   – une couronne flottante (2) de sortie de mouvement du train épicycloïdal (1),
   – un pignon menant de descente (3),
   – une roue de parcage (4),
   qui sont intégrés par des moyens de liaison de manière à constituer un seul ensemble monobloc.

2. Ensemble selon la revendication 1, caractérisé en ce que les moyens de liaisons consistent :
   – d'une part, à intégrer la roue de parcage (4) à l'extrémité (5) du pignon de descente (3),
   – d'autre part, à solidariser la couronne flottante (2) avec la roue de parcage (4) par des crabots (6) qui prolongent ladite couronne flottante (2) pour pénétrer dans la partie inférieure (7) des creux des dents de parcage (8) afin d'associer la liaison en rotation, tandis que la liaison en translation est donnée par un circlips (9) monté à la fois dans les dents de parcage (8) et dans les crabots (6); la partie supérieure (10) des creux des dents de parcage (8) étant réservée à la fonction parcage.

3. Ensemble selon la revendication 2, caractérisé en ce que le pignon de descente (3) comporte un corps (11) sur lequel est monté l'élément denté (12) avec lequel il est solidarisé; le corps (11) comportant un moyeu (20) avec une jante (13) qui se prolonge par un élément conique (14) avec l'extrémité (5) munie des dents de parcage (8).

4. Ensemble selon la revendication 2, caractérisé en ce que la couronne flottante (2) est constituée par un corps (15) portant les dents d'engrenage (16), le corps (15) se prolongeant par les crabots (6) qui pénètrent dans la partie inférieure (7) des creux des dents de parcage (8).

5. Ensemble selon les revendications 3 et 4, caractérisé en ce que le circlips (9) se monte dans une encoche (17) aménagée à la partie interne (18) de chacun des crabots (6) et à l'extrémité interne (19) de chacune des dents de parcage (8).

6. Ensemble selon la revendication 3, caractérisé en ce que l'élément denté (12) est solidarisé avec le corps (11) par soudure.

FIG.1

EP 0 467 752 A1

# FIG.2

FIG.3

**Office européen des brevets**

# RAPPORT DE RECHERCHE EUROPEENNE

Numero de la demande

EP 91 40 1899

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 539 039 (H.E. CHANA)<br>* Colonne 2, ligne 50 - colonne 3, ligne 3; figures 1,2 *<br>--- | 1 | F 16 H 63/48<br>F 16 H 57/08 |
| A | FR-A-2 349 076 (AUTOMOBILES PEUGEOT)<br>* Page 2, ligne 31 - page 3, ligne 7; figure 1 *<br>----- | 1 | |

**DOMAINES TECHNIQUES RECHERCHES (Int. Cl.5)**

F 16 H
B 60 T

Le présent rapport a été établi pour toutes les revendications

| Lieu de la recherche | Date d'achèvement de la recherche | Examinateur |
|---|---|---|
| LA HAYE | 10-10-1991 | MENDE H. |